# EUROPEAN PATENT APPLICATION

(11) **EP 4 303 987 A1**
(43) Date of publication of application: **10.01.2024**
(21) Application number: 22204641.9
(22) Date of filing: 31.10.2022
(51) Int. Cl.: H01M 50/107, H01M 50/152, H01M 50/169, H01M 50/528, H01M 50/531

(54) **BATTERY AND MANUFACTURING METHOD FOR BATTERY**

(30) Priority: 04.07.2022 CN 202210786769
(71) Applicant: CALB Co., Ltd., Changzhou City, Jiangsu Province (CN)
(72) Inventor: SUN, Qianqian, Changzhou City, Jiangsu Province (CN); QI, Binwei, Luoyang City, Henan Province (CN); ZHANG, Lulu, Changzhou City, Jiangsu Province (CN)
(74) Representative: Becker, Eberhard

(57) **Abstract**

A battery and a manufacturing method for the same are provided. The battery includes a battery casing (10), a cell (20) and a connecting member (60), the battery casing (10) includes a casing member (12) and a cover plate (11). The casing member (12) and the cover plate (11) are connected to form an accommodation space. The cell (20) is arranged in the accommodation space of the battery casing (10). The casing member (12) is provided with a position-limiting portion (121) for limiting a position of the connecting member (60). The connecting member (60) is engaged with the position-limiting portion (121), and the casing member (12), the cover plate (11), and the connecting member (60) are welded. By setting a position-limiting portion (121) at a predetermined distance from the opening of the casing member (12), the position-limiting portion (121) is used to limit the position of the connecting member (60).

## Description

### BACKGROUND

### Technical Field

The present disclosure relates to the field of battery technology, and in particular to a battery and a manufacturing method for the battery.

### Description of Related Art

With the development and progress of technology, the use of electric vehicles has become increasingly common. A battery pack is provided in an electric vehicle, and the battery pack is used to store electric energy and provide energy to the electric vehicle. A battery pack is normally provided with a plurality of batteries, the battery includes a battery casing and a connecting member, and the connecting member is arranged in the battery casing. In the related art, when the connecting member is connected to the battery casing, it is difficult to position the connecting member.

It should be noted that the information disclosed in the above background section is only for enhancement of understanding of the background of the present disclosure, and therefore may contain information that does not form the prior art that is already known to a person of ordinary skill in the art.

### SUMMARY

The purpose of the present disclosure is to provide a battery and a manufacturing method for the battery.

According to an aspect of the present disclosure, a battery is provided, and the battery includes a battery casing, a cell, and a connecting member. The battery casing includes a casing member and a cover plate, and the casing member and the cover plate are connected to form an accommodation space. The cell is arranged in the accommodation space of the battery casing. The connecting member connects the cell and the battery casing. The casing member is provided with a position-limiting portion for limiting a position of the connecting member, and the casing member, the cover plate, and the connecting member are connected by welding.

According to a second aspect of the present disclosure, a manufacturing method for a battery is provided, and the manufacturing method includes the following steps. Forming a position-limiting portion on the casing member, wherein the casing member is provided with an opening, and a predetermined distance is formed between the position-limiting portion and the opening of the casing member. Placing the connecting member on the position-limiting portion from the opening on the casing member. Welding a cover plate to the opening on the casing member to block the opening.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a first partial cross-sectional view of a battery provided by an exemplary embodiment of the present disclosure.
FIG. 2 is a second partial cross-sectional view of a battery according to an exemplary embodiment of the present disclosure.
FIG. 3 is a third partial cross-sectional view of a battery according to an exemplary embodiment of the present disclosure.
FIG. 4 is a cross-sectional view of a battery provided by an exemplary embodiment of the present disclosure.
FIG. 5 is a fourth partial cross-sectional view of a battery provided by an exemplary embodiment of the present disclosure.
FIG. 6 is a schematic view of a connecting member provided by an exemplary embodiment of the present disclosure.
FIG. 7 is a schematic view of a support member provided by an exemplary embodiment of the present disclosure.
FIG. 8 is a schematic view of a pole provided by an exemplary embodiment of the present disclosure.
FIG. 9 is a schematic view of a current collector plate provided by an exemplary embodiment of the present disclosure.
FIG. 10 is a flowchart of a manufacturing method for a battery according to an exemplary embodiment of the present disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

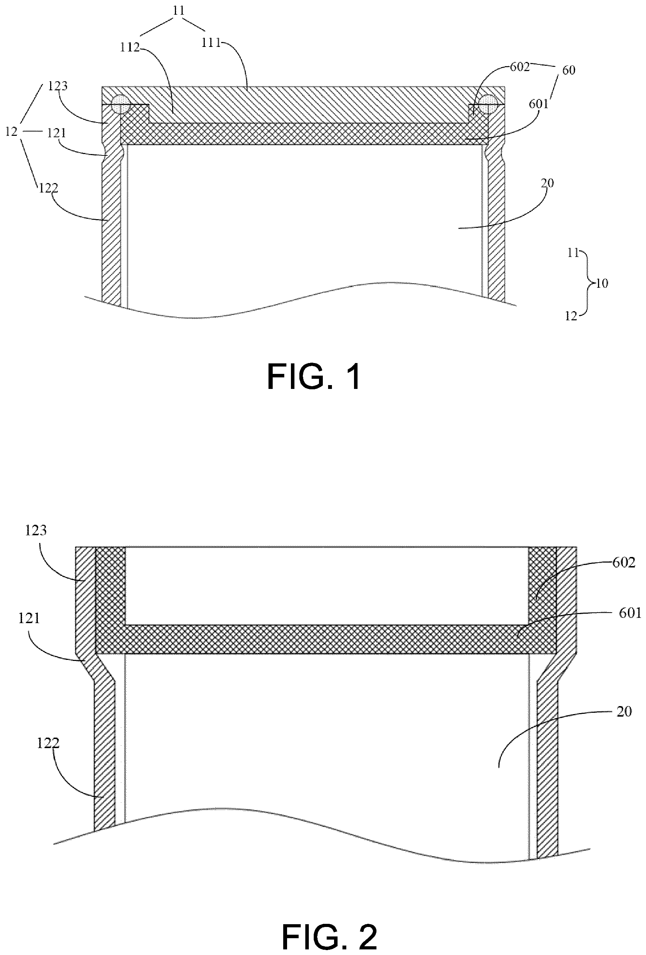

An exemplary embodiment of the present disclosure first provides a battery. As shown in FIG. 1, the battery includes a battery casing 10, a cell 20 and a connecting member 60. The battery casing 10 includes a casing member 12 and a cover plate 11. The casing member 12 and the cover plate 11 are connected to form an accommodation space. The cell 20 is arranged in the accommodation space of the battery casing 10. The connecting member 60 connects the cell 20 and the battery casing 10. The casing member 12 is provided with a position-limiting portion 121 for limiting a position of the connecting member 60, and the casing member 12, the cover plate 11, and the connecting member 60 are welded.

The casing member 12, the cover plate 11, and the connecting member 60 are connected by one-time welding.

In the battery provided by the embodiment of the present disclosure, by providing the position-limiting portion 121 at a predetermined distance from the opening of the casing member 12, and using the position-limiting portion 121 to limit the position of the connecting member 60, the connecting member 60 may be easily aligned in the battery manufacturing process, thereby improving the production efficiency and yield of the battery.

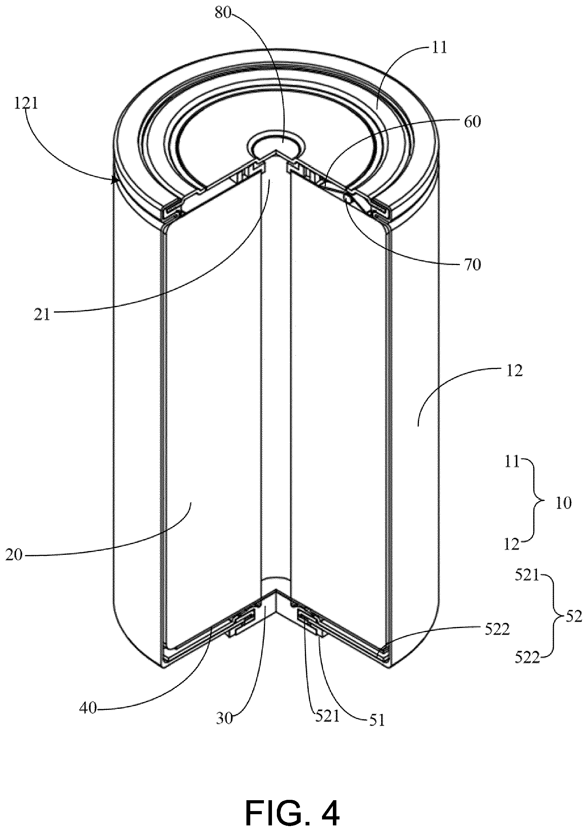

Further, as shown in FIG. 4, the battery provided by the embodiment of the present disclosure may further include a pole 30, a current collector plate 40, and a support member. The pole 30 is arranged on the casing member 12, and the current collector plate 40 is arranged at one end of the cell 20 away from the connecting member 60. The current collector plate 40 connects the pole 30 and the cell 20. The current collector plate 40 serves as a current collector for the first electrode of the battery, and the connecting member 60 serves as a current collector for the second electrode of the battery. The support member is disposed on the connecting member 60, and the support member is configured to support the connecting member 60 and guide the deformation of the connecting member 60.

Each part of the battery provided by the embodiments of the present disclosure will be described in detail below:

The battery casing 10 is configured to form the outer contour of the battery, and the battery casing 10 may protect the internal structure of the battery. The battery casing 10 has an accommodation space therein, the cell 20 is arranged in the accommodation cavity of the battery casing 10. The pole 30 is arranged in the battery casing 10, and at least a part of the pole 30 is located in the accommodation cavity. An electrolyte is provided in the accommodation space of the battery casing 10.

One end of the casing member 12 has an opening. The cover plate 11 and the casing member 12 are welded, and the cover plate 11 is located at the opening of the casing member 12. Through the connection between the cover plate 11 and the casing member 12, the end portion of the casing member 12 is closed.

Illustratively, the battery provided by the embodiment of the present disclosure may be a cylindrical battery. On basis of the above, the battery casing 10 may be a hollow cylinder or an approximate hollow cylinder structure. The battery casing 10 is a thin-walled structure, and the thickness of the thin wall of the battery casing 10 may be the same or different at different positions. The cover plate 11 is a thin wall on one bottom surface of a hollow cylinder, the casing member 12 may include a thin wall on the other bottom surface of the hollow cylinder and a thin wall on the lateral surface of the hollow cylinder, or the casing member 12 is a thin wall on the lateral surface of the hollow cylinder.

In the embodiment of the present disclosure, the casing member 12 may be an integral structure. For example, the casing member 12 may be an integral hollow cylinder with an opening at one end formed by casting or machining. Alternatively, the casing member 12 may be a separate structure, for example, the casing member 12 may include a housing body and an end plate, and the end plate is connected to one end of the housing body away from the cover plate 11.

In the embodiment of the present disclosure, the material of the casing member 12 is a metal material, for example, the material of the casing member 12 may be steel, aluminum, copper, silver, or the like. The material of the cover plate 11 is a metal material, for example, the material of the cover plate 11 may be steel, aluminum, copper, silver, or the like. The materials of the casing member 12 and the cover plate 11 may be the same or different.

A position-limiting portion 121 is provided on the casing member 12 at a predetermined distance from the opening, and the position-limiting portion 121 is configured to limit the position of the connecting member 60 during configuration. The predetermined distance is configured such that when the connecting member 60 is engaged with the position-limiting portion 121, one end of the connecting member 60 away from the cell 20 contacts the cover plate 11.

The casing member 12 may include a first casing segment 122 and a second casing segment 123. The first casing segment 122 is disposed adjacent to the cover plate 11, the first casing segment 122 and the second casing segment 123 are connected, and the position-limiting portion 121 is formed at the junction of the first casing segment 122 and the second casing segment 123. The second casing segment 123 has a contracted state (as shown in FIG. 1) and an initial state (as shown in FIG. 2), and the second casing segment 123 is contracted to form a contracted state in the initial state.

As shown in FIG. 2, when the second casing segment 123 is in the contracted state, the cross-sectional area of the second casing segment 123 is the same as the cross-sectional area of the first casing segment 122, and when the second casing segment 123 is in the initial state, the cross-sectional area of the second casing segment 123 is larger than the cross-sectional area of the first casing segment 122. The cross-sectional area of the first casing segment 122 refers to the area of the first casing segment 122 taken parallel to the cross-section of the cover plate 11, and the cross-sectional area of the second casing segment 123 refers to the area of the second casing segment 123 taken parallel to the cross-section of the cover plate 11.

For example, when the battery is a cylindrical battery, the casing member 12 is a hollow cylindrical structure. Both the first casing segment 122 and the second casing segment 123 are hollow cylindrical, and the diameter of the second casing segment 123 is larger than the diameter of the first casing segment 122. An inclined transition segment may be provided on the first casing segment 122 and the second casing segment 123.

The diameter of the second casing segment 123 is larger than the diameter of the first casing segment 122, and the diameter of the second casing segment 123 is larger than the diameter of the connecting member 60, which facilitates placing the connecting member 60 in the casing member 12 and avoids friction between the connecting member 60 and the casing member 12 during configuration and metal chips caused by the friction.

On basis of the above, the connecting member 60 may also have an initial state and a contracted state, and the diameter of the connecting member 60 in the initial state is larger than the diameter of the connecting member 60 in the contracted state. When the second casing segment 123 undergoes the contracting process, the connecting member 60 is also contracted.

In the embodiment of the present disclosure, the diameter of the connecting member 60 changes as the diameter of the second casing segment 123 changes during the contracting process. In the final battery, the diameter of the second casing segment 123 may be the same as the diameter of the first casing segment 122, or the diameter of the second casing segment 123 may be different from the diameter of the first casing segment 122, the present disclosure is not specifically limited thereto. Moreover, in the battery, the position-limiting portion 121 at the junction between the first casing segment 122 and the second casing segment 123 may finally be in the shape of recess or a protrusion. For example, the position-limiting portion 121 may be recessed inward by processing methods such as hemming, or when the contract processing is performed on the second casing segment 123, the contraction of the position-limiting portion 121 is less than the contraction of the second casing segment 123, thereby forming an outward protrusion.

The cover plate 11 may include a cover plate body 111 and a positioning portion 112 positioned on one side of the cover plate body 111 facing the connecting member 60. The positioning portion 112 is configured to cooperate with the connecting member 60 to realize the configuration and positioning of the cover plate 11.

The cover plate body 111 may be overlapped with the end portion of the casing member 12, and the positioning portion 112 may be a protrusion located on one side of the cover plate body 111 facing the connecting member 60. The protrusion is inserted into the connecting member 60 to realize the positioning of the cover plate 11.

For example, the cover plate body 111 is a circular plate, and the diameter of the cover plate body 111 is the same as the outer diameter (the diameter of the second casing segment 123 after contracting processing) of the casing member 12. The positioning portion 112 is a cylindrical protrusion, and the size of the positioning portion 112 matches the size of the recess on the connecting member 60.

The cell 20 is disposed in the battery casing 10, and the cell 20 refers to a unit formed by winding or laminating a stack portion, and the stack portion includes a first electrode, a separator and a second electrode. When the first electrode is a positive electrode, the second electrode is a negative electrode, and the polarities of the first electrode and the second electrode may be interchanged.

The cell 20 is connected to the current collector plate 40 and the connecting member 60, and the current collector plate 40 is connected to the pole 30, thereby realizing the electrical connection between the cell 20 and the pole 30. The connecting member 60 is connected to the battery casing 10 to realize the electrical connection between the battery casing 10 and the cell 20. The shape of the cell 20 may match the shape of the battery. For example, when the battery is a cylindrical battery, the cell 20 may also have a cylindrical or approximately cylindrical structure.

The cell 20 may include a cell body and a tab, the tab protrudes from the end portion of the cell body, and the tab is configured to connect with the current collector plate 40. Exemplarily, the cell body may be provided with a first tab and a second tab, the first tab is disposed at one end of the cell body, and the second tab is disposed at the other end of the cell body. The first tab may be a positive tab, and the second tab may be a negative tab. The first tab is arranged at one end of the cell body adjacent to the pole 30, and the second tab is arranged at the other end of the cell body away from the pole 30. The first tab may be welded with the current collector plate 40, and the second tab may be welded with the connecting member 60.

The cell body may include a first electrode sheet, a second electrode sheet and a diaphragm. The first tab is arranged on the first electrode sheet, the second tab is arranged on the second electrode sheet, and the first electrode sheet and the second electrode sheet are separated by the diaphragm, thereby forming the cell body.

Specifically, the cell 20 provided in the embodiment of the present disclosure may be a wound cell. The wound cell is obtained by winding the first electrode sheet, the second electrode sheet that is electrically opposite to the first electrode sheet, and the diaphragm disposed between the first electrode sheet and the second electrode sheet.

Of course, in practical applications, the cell 20 may also be a laminated cell, and the embodiment of the present disclosure is not limited thereto. The cell 20 has a first electrode sheet, a second electrode sheet that is electrically opposite to the first electrode sheet, and a diaphragm disposed between the first electrode sheet and the second electrode sheet, which are stacked together, so that multiple pairs of the first electrode sheet and the second electrode sheet are stacked to form a laminated cell.

The connecting member 60 is configured to electrically connect the cell 20 and the battery casing 10, and the connecting member 60 is welded with the casing member 12 and the cover plate 11. The casing member 12, the cover plate 11 and the connecting member 60 are connected by welding simultaneously, that is, the casing member 12, the cover plate 11 and the connecting member 60 are connected by one-time welding.

The connecting member 60 is provided with a welding region, and the welding region is in contact with the casing member 12 and/or the cover plate 11. For example, the connecting member 60 is in contact with the casing member 12 and the cover plate 11 simultaneously, or the cover plate 11 is in contact with the casing member 12 and the connecting member 60 simultaneously.

In a possible embodiment of the present disclosure, as shown in FIG. 1, one end of the connecting member 60 adjacent to the cover plate 11 is aligned with one end of the casing member 12 adjacent to the cover plate 11, so that the lower surface of the cover plate 11 is in contact with the casing member 12 and the connecting member 60 simultaneously.

The connecting member 60 includes a main body portion 601 and a protruding portion 602. The protruding portion 602 is connected to the main body portion 601, the main body portion 601 and the cover plate 11 are arranged at intervals, and the protruding portion 602 is away from one end of the main body portion 601 and is aligned with one end of the casing member 12 adjacent to the cover plate 11.

During the manufacturing process of the battery, the main body portion is engaged with the position-limiting portion of the casing member, and one end of the protruding portion away from the main body portion is aligned with the end surface (that is, the opening) of the casing member. Under the circumstances, the predetermined distance between the position-limiting portion and the opening is consistent with the height of the protruding portion.

Exemplarily, the protruding portion 602 may be an annular structure, and the protruding portion 602 surrounds the main body portion 601. The outer wall of the protruding portion 602 is in contact with the inner wall of the casing member 12. One end of the protruding portion 602 adjacent to the cover plate 11 is aligned with one end of the casing member 12 adjacent to the cover plate 11, and the edge of the cover plate 11 may be in contact with the end surface of the casing member 12 adjacent to the cover plate 11. The casing member 12, the cover plate 11 and the connecting member 60 are welded and connected at one time by means of laser welding, penetration welding or resistance welding. A welding portion 201 is formed at a position where the bottom surface of the cover plate 11 is in contact with the casing member 12 and the connecting member 60. Certainly, in practical applications, the protruding portion 602 may also be formed by a plurality of protrusions arranged at intervals on the main body portion 601 adjacent to the cover plate 11, and the embodiment of the present disclosure is not limited thereto.

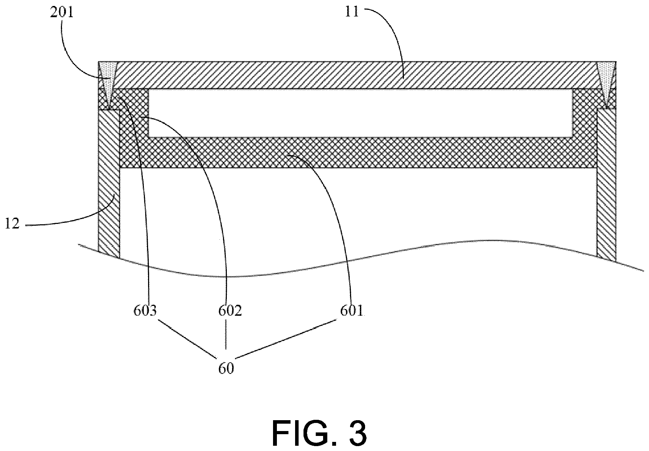

In another feasible embodiment of the present disclosure, as shown in FIG. 3, a part of the connecting member 60 is clamped between the cover plate 11 and the casing member 12, so that the two opposite surfaces of the connecting member 60 are respectively in contact with the casing member 12 and the cover plate 11.

The connecting member 60 includes a main body portion 601, a protruding portion 602 and a flange portion 603. The protruding portion 602 is connected to the main body portion 601, and the flange portion 603 is connected to the protruding portion 602. The main body portion 601 and the cover plate 11 are arranged at intervals, and the flange portion 603 is clamped between the cover plate 11 and casing member 12.

During the manufacturing process of the battery, the main body portion is engaged with the position-limiting portion of the casing member, and the flange portion overlaps with the end portion (that is, the opening) of the casing member. Under the circumstances, the predetermined distance between the position-limiting portion and the opening is consistent with the height of the protruding portion.

Illustratively, the protruding portion 602 surrounds the main body portion 601, the flange portion 603 surrounds the protruding portion 602, and the flange portion 603 is located at one end of the protruding portion 602 away from the main body portion 601. The protruding portion 602 may be in contact with the inner wall of the casing member 12, the flange portion 603 is higher than the end surface of the casing member 12 adjacent to the cover plate 11, and the flange portion 603 extends outward from the protruding portion 602 to the surface of the casing member 12. The cover plate 11 is disposed on one side of the flange portion 603 away from the casing member 12, and the cover plate 11 is at least partially in contact with the flange portion 603. The welding portion 201 may extend from the cover plate 11 to the casing member 12 at one time, so as to realize simultaneous welding of the cover plate 11, the connecting member 60 and the casing member 12.

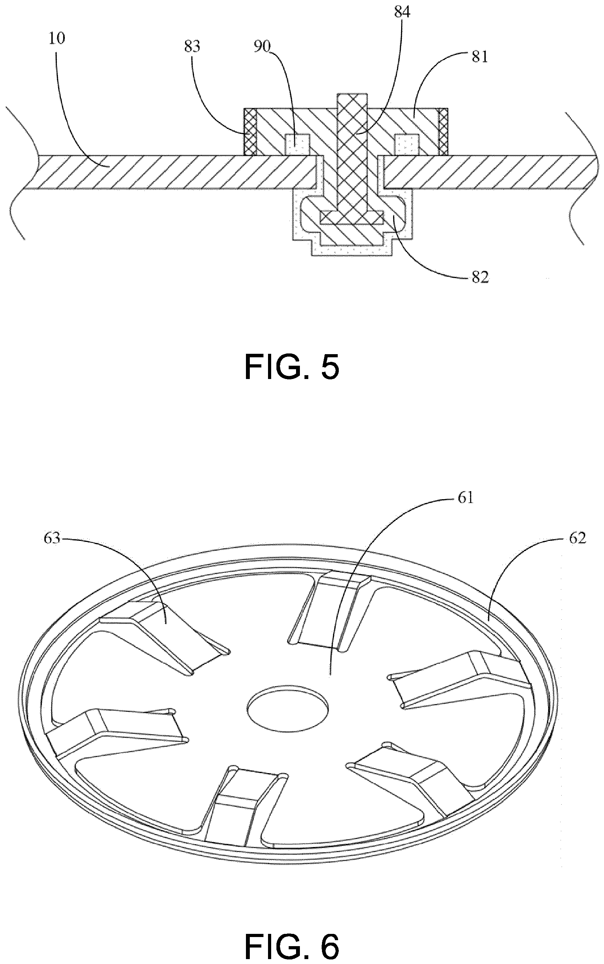

Optionally, as shown in FIG. 6, the connecting member 60 includes a first connection portion 61, a second connection portion 62 and a buffer portion 63. The first connection portion 61 is configured to be electrically connected to the cell 20, the second connection portion 62 is configured to be electrically connected to the battery casing 10, and both ends of the buffer portion 63 are respectively connected to the first connection portion 61 and the second connection portion 62. There is an included angle between the first connection portion 61 and the second connection portion 62, such that the surface of the second connection portion 62 for electrical connection with the battery casing 10 is inclined with respect to the surface of the first connection portion 61 for electrical connection with the cell 20.

The connecting member 60 may be provided with a plurality of second connection portions 62 and a plurality of buffer portions 63. Each of the second connection portions 62 is correspondingly connected to one buffer portion 63, and each interval on the first connection portion 61 is correspondingly connected to one buffer portion 63. For example, the first connection portion 61 is provided with four connection pieces 612. Under the circumstances, the first connection portion 61 is provided with four intervals, and the connecting member 60 is provided with four buffer portions 63 and four second connection portions 62 correspondingly.

In the embodiment of the present disclosure, the included angle between the first connection portion 61 and the second connection portion 62 may be greater than 0 degrees and less than 180 degrees. Preferably, the included angle between the first connection portion 61 and the second connection portion 62 is 90 degrees.

The second connection portion 62 has a first recess, and one side of the second connection portion 62 facing the buffer portion 63 is the inner side. The first recess on the second connection portion 62 is formed by hemming the battery casing 10 and the second connection portion 62. In the initial state, the second connection portion 62 does not have the first recess, and the second connection portion 62 may be a cylindrical surface. After a hemming process is performed on the battery casing 10 and the second connection portion 62, a first recess is formed on the second connection portion 62, and a second recess is formed on the battery casing 10.

The buffer portion 63 connects the first connection portion 61 and the second connection portion 62, and the buffer portion 63 may be an elastic buffer portion. The buffer portion 63 may be elastically deformed, and when the second connection portion 62 and the battery casing 10 are contracted, the buffer portion 63 may serve as a buffer to avoid stress concentration on the connecting member 60. Moreover, the buffer portion 63 separates the first connection portion 61 from the second connection portion 62, so that the mutual influence between the first connection portion 61 and the second connection portion 62 may be avoided, thereby ensuring the connection stability of each connection portion.

In the embodiment of the present disclosure, the first connection portion 61, the second connection portion 62 and the buffer portion 63 may be an integral structure, for example, the connecting member 60 may be formed by cutting and bending a plate. Certainly, in practical applications, the first connection portion 61, the second connection portion 62 and the buffer portion 63 may be of separate structures, and the embodiment of the present disclosure is not limited thereto.

When the connecting member 60 includes the first connection portion 61, the second connection portion 62 and the buffer portion 63, the connecting member 60 may be welded with the cover plate 11 and the casing member 12 through the second connection portion 62. For example, the second connection portion 62 may form the protruding portion 602, and the buffer portion 63 and the first connection portion 61 may form the main body portion 601. When the connecting member 60 further includes a flange portion 603, the flange portion 603 may be disposed on the top portion of the second connection portion 62, and the flange portion 603 extends outward.

In the embodiment of the present disclosure, the material of the connecting member 60 is a conductor material. For example, the material of the connecting member 60 may be copper, aluminum, iron, silver, zinc, tungsten, titanium, titanium alloy, or aluminum alloy.

It should be noted that, in the embodiment of the present disclosure, a sealant may also be provided between the casing member 12 and the cover plate 11, and the casing member 12 and the cover plate 11 are connected by welding and the sealant, which may improve the sealing performance of the casing member 12 and the cover plate 11, thereby preventing electrolyte in the battery from leaking.

In the embodiment of the present disclosure, as shown in FIG. 5, the electrolyte is injected into the first accommodation portion after the cover plate 11 and the casing member 12 are connected. In order to inject the electrolyte into the battery, an injection hole 101 may be opened on the cover plate 11 or the casing member 12, and the electrolyte is injected into the first accommodation part through the injection hole 101. After the electrolyte is injected into the battery, the injection hole 101 needs to be sealed. On basis of the above, the battery may further include a sealing pin 80, and the sealing pin 80 is configured to seal the injection hole 101.

Exemplarily, the injection hole 101 may be provided on the cover plate 11, the sealing pin 80 may be provided in the injection hole 101, and the sealing pin 80 is partially located outside the cover plate 11. A sealant 90 is further arranged between the sealing pin 80 and the cover plate 11, and the sealant 90 is provided to improve the sealing performance.

For example, the sealing pin 80 may include a sealing cap 81, a sealing body 82 and a sealing core 83. The sealing cap 81 is located outside the battery casing, the sealing body 82 is connected to the sealing cap 81, and at least a part of the sealing body 82 is disposed in the injection hole 101. The sealing core 83 is disposed in the sealing body 82, and the sealing core 83 allows the sealing body 82 to inflate in the radial direction of the sealing core 83, such that the sealing body 82 is fixedly connected to the battery casing by riveting.

The sealing cap 81 is provided at one end of the sealing body 82 away from the cell 20, and the sealing cap 81 may cover the injection hole 101 on the battery casing. For example, the diameter of the sealing cap 81 is larger than the diameter of the sealing body 82, and the diameter of the sealing cap 81 is also larger than the diameter of the injection hole 101, so that the sealing cap 81 may be locked on the surface of the battery casing.

In the embodiment of the present disclosure, the sealing cap 81 and the sealing body 82 may be an integral structure. For example, the sealing cap 81 and the sealing body 82 may be integrally formed by casting or machining. Alternatively, the sealing cap 81 and the sealing body 82 may also be of separate structures, which are not specifically limited in this embodiment of the present disclosure.

At least a part of the sealant 90 is disposed between the sealing cap 81 and the battery casing, and between the sealing body 82 and the hole wall of the injection hole 101. By sealing the injection hole 101 with the sealant 90, it is possible to improve the sealing performance of the injection hole 101, and the connection through the sealant 90 may effectively control the thickness of the sealing layer, so as to prevent the sealing layer from occupying too much space of the battery.

In the embodiment of the present disclosure, the elastic modulus of the sealant 90 is 0.001 GPa to 20 Gpa, the compression amount of the sealant 90 is 5% to 40%, the adhesion pull-out strength of the sealant 90 is 0.1 MPa to 30 Mpa, and the thickness of the sealant 90 is 0.1mm to 1.5mm.

It should be noted that, in the embodiment of the present disclosure, the elastic modulus of different parts of the sealant layer may be the same or different, the compression amount of different parts of the sealant layer may be the same or different, the adhesion pull-out strength of different parts of the sealant layer may be the same or different, and the thickness of different parts of the sealant layer may be the same or different.

Exemplarily, the sealant 90 includes one or more of thermoplastic polyurethane elastomer rubber, ethylene-vinyl acetate copolymer, silicone rubber, polyolefin-based hot melt adhesive, polyvinyl chloride hot melt adhesive, styrene-butadiene rubber, and ethylene-propylene rubber.

The support member 70 and the connecting member 60 are engaged. For example, the connecting member 60 is provided with a connection through hole, and the support member 70 is engaged with the connection through hole. The connection through hole may be provided in the first connection portion 61 of the connecting member 60.

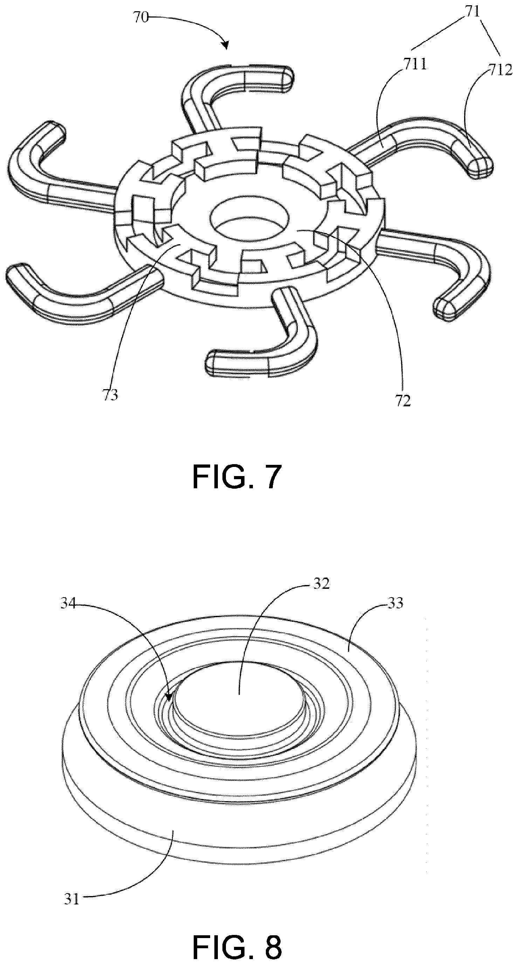

As shown in FIG. 7, the support member 70 may include a support member body 72, a fixing claw 71, a first support protrusion and a second support protrusion 73. The first support protrusion and the second support protrusion 73 are respectively provided at both ends of the support member body 72, and the fixing claw 71 is provided on the lateral portion of the support member body 72. The fixing claw 71 is configured to provide support to the buffer portion when the connecting member 60 is contracted.

The support member body 72 is disposed on one side of the first connection portion 61 away from the cell 20, the first support protrusion may be connected to one surface of the support member body 72 adjacent to the cell 20, and the first support protrusion passes through the connection through hole on the first connection portion 61 to be in contact with the cell 20.

The cell 20 may be provided with a hole of the cell 20, the first support protrusion passes through the connection through hole and extends into the hole of cell 20, and the first support protrusion extending into the hole of cell 20 may improve the connection strength of the cell 20 and the support member 70.

The hole of cell 20 may be a recess portion on the end surface of the cell 20 adjacent to the connecting member 60. When the cell 20 is a cylindrical cell 20, the hole of cell 20 may be a circular hole, and the hole of cell 20 and the cell 20 are arranged concentrically.

The second support protrusion 73 is provided on the end surface of the support member body 72 away from the cell body, and one end of the second support protrusion 73 away from the support member body 72 may be in contact with the first cover plate 11 of the battery casing 10. The second support protrusion 73 may limit the distance between the connecting member 60 and the first cover plate 11.

The support member body 72 is provided with at least one fixing claw 71, and the fixing claw 71 is connected to the lateral portion of the support member body 72. When the support member body 72 is provided with a plurality of fixing claws 71, the plurality of fixing claws 71 may be evenly distributed on the edge of the support member body 72.

The support member 70 may be provided with a plurality of liquid-passing through holes, the liquid-passing through holes penetrate the support member 70 in the axial direction of the cell 20, and the liquid-passing through holes are used to form an electrolyte circulation channel. Through the electrolyte circulation channel on the support member 70, the wetting effect of the electrolyte may be improved. Exemplarily, the liquid-passing through hole may be provided on the support member body 72.

In the embodiment of the present disclosure, the support member 70 is an insulating support member, that is, the material of the support member 70 is an insulating material. For example, the material of the support member 70 may be plastic, rubber or ceramics.

As shown in FIG. 8, the pole 30 includes a pole body 31, a connection flange 33 and a transition protrusion 32. The connection flange 33 and the transition protrusion 32 are both connected to one end of the pole body 31 adjacent to the cell 20. Moreover, at least a part of the connection flange 33 and at least a part of the transition protrusion 32 are both located in the battery casing 10, the connection flange 33 is connected to the battery casing 10, and the transition protrusion 32 is electrically connected to the cell 20.

The connection flange 33 is connected to the battery casing 10, and the transition protrusion 32 is connected to the cell 20, so as to realize the independent connection of the pole 30, the battery casing 10 and the cell 20, and to avoid the unstable connection of the pole 30 caused by the mutual influence between the battery casing 10 and the cell 20 during the connection. In this way, the stability of the connection of the cell 20 is improved, and at least a part of the surface of the connection flange 33 connected to the battery casing 10 is perpendicular to the axial direction of the cell 20, such that the connection flange 33 may also be electrically connected to the cell 20, thereby enhancing the overcurrent capability of the cell 20.

The pole 30 may pass through the battery casing 10, the battery casing 10 is provided with an installation through hole, and the pole 30 is arranged in the installation through hole. The pole body 31 at least partially protrudes from one side of the first cover plate 11 away from the cell 20, and the connection flange 33 and the transition protrusion 32 are located in the accommodation cavity of the battery casing 10.

In the embodiment of the present disclosure, the material of the pole 30 is a conductor material, for example, the material of the pole 30 may be aluminum, aluminum alloy, copper, stainless steel, silver, or the like. The material of the pole 30 may be the same as the material of the battery casing 10, or the material of the pole 30 may be different from the material of the battery casing 10, which is not specifically limited in this embodiment of the present disclosure.

The first insulating member 51 is arranged between the battery casing 10 and the pole 30 to achieve insulation between the battery casing 10 and the pole 30. The first insulating member 51 includes a first insulator 511 and a second insulator 512 which are arranged separately. The first insulator 511 is connected to the pole 30, and the second insulator 512 is connected to the first insulator 511.

The second insulating member 52 is provided between the battery casing 10 and the pole 30, and the second insulating member 52 is located on one side of the battery casing 10 away from the cell 20.

The pole body 31 passes through the first cover plate 11, and one end of the pole body 31 away from the transition protrusion 32 is provided with a position-limiting portion 311. The position-limiting portion 311 protrudes from a surface of the first cover plate 11 away from the cell 20. The second insulator 52 is located between battery casing 10 and position-limiting portion 311.

The second insulating member 52 is sleeved on the pole body 31 and is located on one side of the first cover plate 11 away from the cell 20. The position-limiting portion 311 protrudes from the first cover plate 11, and the second insulating member 52 is located between the position-limiting portion 311 and the first cover plate 11, and insulation between the position-limiting portion 311 and the battery casing 10 is achieved through the second insulating member 52.

In the embodiment of the present disclosure, the material of the insulating member may be plastic, rubber, ceramics, etc., and the materials of the first insulating member 51 and the second insulating member 52 may be the same or different. Materials of the first insulator 511 and the second insulator 512 may be the same or different, which are not specifically limited in this embodiment of the present disclosure.

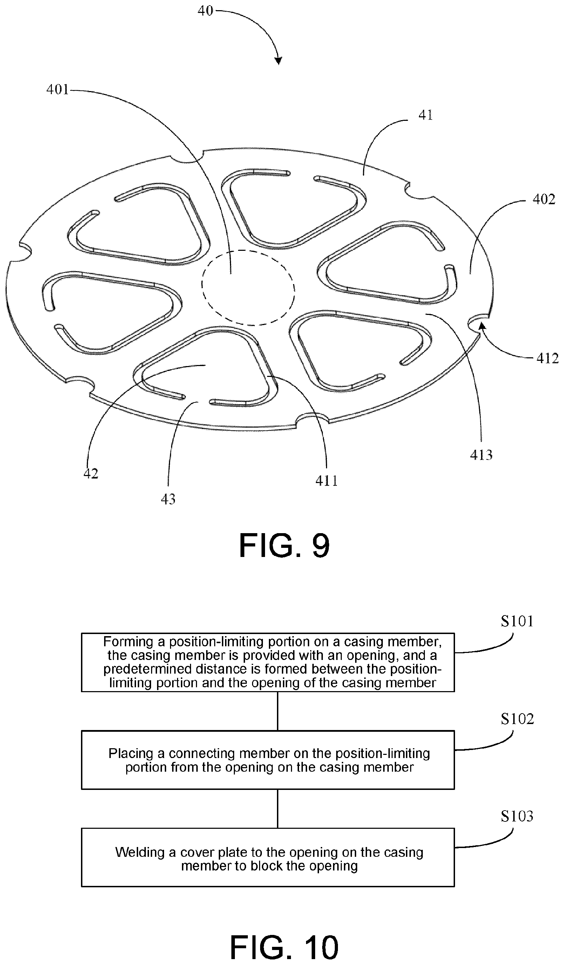

As shown in FIG. 9, the current collector plate 40 includes a current collector plate body 41 and cantilevers 42. The current collector plate body 41 includes a first connection region 401 and a second connection region 402. The first connection region 401 is used to connect the pole 30, and the second connection region 402 is provided with cantilever holes 411 penetrating the current collector plate body 41. The cantilevers 42 are connected to the current collector plate body 41 and are respectively located in the cantilever holes 411. There is a gap between each of the cantilevers 42 and the current collector plate body 41, and the cantilevers 42 are configured to be connected to the cell 20.

The shape of the first connection region 401 may match the shape of the junction between the pole 30 and the current collector plate 40. For example, if a cylindrical transition protrusion 32 is provided on the pole 30, and the transition protrusion 32 is provided to be connected to the current collector plate 40, the shape of the first connection region 401 on the current collector plate body 41 may also be circular. Moreover, the area of the first connection region 401 is greater than or equal to the area of the connection surface of the transition protrusion 32. Furthermore, the position of the transition protrusion 32 corresponds to the position of the first connection region 401, that is, the orthographic projection of the transition protrusion 32 on the current collector plate 40 is located in the first connection region 401.

The pole 30 and the first connection region 401 may be connected by welding, for example, the pole 30 and the first connection region 401 may be connected by resistance welding. Certainly, in practical applications, there may be other connection methods for connecting the pole 30 and the first connection region 401, which is not specifically limited in this embodiment of the present disclosure.

The second connection region 402 is provided with cantilever holes 411 penetrating the current collector plate body 41, and the cantilevers 42 are connected in the cantilever hole 411. When a plurality of cantilever holes 411 are provided on the current collector plate body 41, a cantilever 42 is correspondingly provided in each cantilever hole 411. In the current collector plate body 41, the plurality of cantilever holes 411 may be uniformly distributed along the circumferential direction, and on this basis, the plurality of cantilever arms 42 are also uniformly distributed along the circumferential direction.

The cantilever hole 411 is located inside the second connection region 402 to avoid intersection of the cantilever hole 411 and the outer edge of the current collector plate body 41, that is, the cantilever hole 411 and the edge of the current collector plate 40 are spaced apart by a predetermined distance. By arranging the cantilever hole 411 at inner side of the second connection region 402, the integrity of the current collector plate 40 may be ensured, and the strength of the current collector plate 40 may be ensured, so as to avoid damage to the current collector plate 40 during manufacturing and transportation.

In practical applications, the distance between one end of the cantilever hole 411 adjacent to the edge of the current collector plate body 41 and the edge of the current collector plate body 41 may be gradually changed. It should be ensured that the minimum distance between one end of the cantilever hole 411 adjacent to the edge of the current collector plate body 41 and the edge of the current collector plate body 41 is greater than or equal to a predetermined distance. For example, this predetermined distance may be 1 mm, 1.5 mm, 2 mm, or 3 mm.

The second connection region 402 at least partially surrounds the first connection region 401. For example, the second connection region 402 may surround the first connection region 401. The first connection region 401 is a circular region, the second connection region 402 may be a circular annular region, and the first connection region 401 is embedded in the inner ring of the second connection region 402. Certainly, in practical applications, the first connection region 401 and the second connection region 402 may also have other positional relationships, and the embodiment of the present disclosure is not limited thereto. For example, the first connection region 401 is located on one side of the second connection region 402, and the first connection region 401 and the second connection region 402 are arranged in parallel, and so on.

By setting the width of the connection portion to be smaller than the width of the fixed end of the cantilever 42, the current collector plate 40 may have greater flexibility at the connection portion, which facilitates the deformation of the free end of the cantilever 42, thereby further enhancing the connection strength of the cantilever 42 and the tabs.

In the embodiment of the present disclosure, the material of the current collector plate 40 is a conductor material. For example, the material of the current collector plate 40 may be one or more of copper, aluminum, silver, titanium, steel, aluminum alloy, and titanium alloy.

It should be noted that, in the embodiment of the present disclosure, the current collector plate 40 may be an integral structure, and the cantilever 42 may be a structure separated by a cutting groove on the current collector plate body 41, and one end of this structure is suspended. For example, a substantially V-shaped or U-shaped through groove that penetrates a circular disk may be formed by cutting the circular disk, and the cantilever 42 may be formed in the region surrounded by the through groove. Alternatively, the current collector plate 40 may also be a separate structure, and a through cantilever hole 411 may be provided on the current collector plate body 41, and the cantilever 42 may be connected to the corresponding position of the cantilever hole 411 by means of welding or the like.

In the battery provided by the embodiment of the present disclosure, the position-limiting portion 121 is provided at a predetermined distance from the opening of the casing member 12, and the position-limiting portion 121 is used to limit the position of the connecting member 60, so that the connecting member 60 is easily aligned during the battery manufacturing process, which facilitates to improve the production efficiency and yield of the battery. Moreover, the second casing segment 123 of the casing member 12 has an initial state and a contracted state, and the diameter of the second casing segment 123 is larger than the size of the adaptor 60 during the configuration of the adaptor 60, which avoids friction between the connecting member 60 and the casing member 12 during configuration of the connecting member 60 and metal chips caused by the friction, thereby enhancing the safety of the battery.

Exemplary embodiments of the present disclosure further provide a manufacturing method for a battery, as shown in FIG. 10, the manufacturing method for a battery may include the following steps.

Step S101, forming a position-limiting portion on the casing member. The casing member is provided with an opening, and a predetermined distance is formed between the position-limiting portion and the opening of the casing member.

Step S102, placing the connecting member on the position-limiting portion from the opening on the casing member.

Step S103, welding a cover plate to the opening on the casing member to block the opening.

In the battery manufacturing method provided by the embodiment of the present disclosure, by providing a position-limiting portion 121 at a predetermined distance from the opening of the casing member 12, and using the position-limiting portion 121 to limit the position of the connecting member 60, the connecting member 60 may be easily aligned during the battery manufacturing process, thereby improving the production efficiency and yield of the battery.

The steps of the battery manufacturing method provided by the embodiments of the present disclosure will be described in detail below.

In the step S101, the position-limiting portion 121 may be formed on the casing member 12, the casing member is provided with the opening, and the predetermined distance is set between the position-limiting portion 121 and the opening of the casing member 12.

The step of forming the position-limiting portion 121 on the casing member 12 may be achieved by the following method. Forming the first casing segment 122 and the second casing segment 123, wherein the first casing segment 122 and the second casing segment 123 are connected, and the cross-sectional area of the second casing segment 123 is larger than the cross-sectional area of the first casing segment 122, so as to form the position-limiting portion 121 at the junction between the first casing segment 122 and the second casing segment 123. One end of the second casing segment 123 away from the first casing segment 122 has the opening.

The casing member 12 may include the first casing segment 122 and the second casing segment 123. The first casing segment 122 and the second casing segment 123 are connected, and the position-limiting portion 121 is formed at the junction between the first casing segment 122 and the second casing segment 123. The second casing segment 123 has a contracted state and an initial state. The second casing segment 123 in the initial state is able to be converted into the contracted state through a contracting process. The second casing segment 123 formed in the step S101 may be the second casing segment 123 in the initial state. In the initial state, the diameter of the second casing segment 123 is larger than the diameter of the connecting member 60, which facilitates placing the connecting member 60 in the casing member 12, and avoids friction between the connecting member 60 and the casing member 12 during configuration and metal chips caused by the friction.

In the step S102, the connecting member 60 may be placed into the position-limiting portion 121 from the opening on the casing member 12.

The connecting member 60 enters the casing member 12 from the opening on the casing member 12, and the diameter of the position-limiting portion 121 is smaller than the diameter of the connecting member 60. When the connecting member 60 contacts the position-limiting portion 121, the position of the connecting member 60 is in a predetermined installation position. In the initial state, the diameter of the second casing segment 123 is larger than the diameter of the first casing segment 122, the diameter of the second casing segment 123 is also larger than the diameter of the connecting member 60. The connecting member 60 is not in contact with the inner wall of the second casing segment 123 or the friction force between the connecting member 60 and the inner wall of the second casing segment 123 is relatively small, so as to avoid metal chips caused by friction.

After the step S102, the manufacturing method for a battery provided by the embodiment of the present disclosure may further include: contracting the second casing segment 123 to reduce the cross-sectional area of the second casing segment 123.

The cross-sectional area of the second casing segment 123 after contracting processing is the same as the cross-sectional area of the first casing segment 122. Of course, in practical applications, the cross-sectional area of the second casing segment 123 after contracting processing may be different from the cross-sectional area of the first casing segment 122, and the embodiment of the present disclosure is not limited thereto.

The second casing segment 123 is converted from the initial state to the contracted state by a contracting process, the diameter of the second casing segment 123 is reduced, and the second casing segment 123 is pressed against the connecting member 60. The diameter of the connecting member 60 changes as the diameter of the second casing segment 123 changes during the contracting process. In the final battery, the diameter of the second casing segment 123 may be the same as the diameter of the first casing segment 122. Moreover, in the battery, the position-limiting portion 121 at the junction between the first casing segment 122 and the second casing segment 123 may finally be in the shape of recess or protrusion. For example, the position-limiting portion 121 may be recessed inward by processing methods such as hemming, or when contracting the second casing segment 123, the contraction of the position-limiting portion 121 is less than the contraction of the second casing segment 123, and the position-limiting portion 121 forms an outward protrusion.

In the step S103, the cover plate 11 may be welded at the opening on the casing member 12 to block the opening.

The casing member 12, the connecting member 60 and the cover plate 11 may be connected by one-time welding. The connecting member 60 is provided with a welding region, and the welding region is in contact with the casing member 12 and/or the cover plate 11. For example, the connecting member 60 is in contact with the casing member 12 and the cover plate 11 simultaneously, or the cover plate 11 is in contact with the casing member 12 and the connecting member 60 simultaneously.

In a possible embodiment of the present disclosure, one end of the connecting member 60 adjacent to the cover plate 11 is aligned with one end of the casing member 12 adjacent to the cover plate 11, so that the lower surface of the cover plate 11 is in contact with the casing member 12 and the connecting member 60 simultaneously.

The connecting member 60 includes a main body portion 601 and a protruding portion 602. The protruding portion 602 is connected to the main body portion 601. The main body portion 601 and the cover plate 11 are arranged at intervals, one end of the protruding portion 602 away from the main body portion 601 is aligned with one end of the casing member 12 adjacent to the cover plate 11.

During the manufacturing process of the battery, the main body portion is engaged with the position-limiting portion of the casing member, and one end of the protruding portion away from the main body portion is aligned with the end surface (i.e., the opening) of the casing member. Under the circumstances, the predetermined distance between the position-limiting portion and the opening is consistent with the height of the protruding portion.

Exemplarily, the protruding portion 602 may be an annular structure, and the protruding portion 602 surrounds the main body portion 601. The outer wall of the protruding portion 602 is in contact with the inner wall of the casing member 12. One end of the protruding portion 602 adjacent to the cover plate 11 is aligned with one end of the casing member 12 adjacent to the cover plate 11, and the edge of the cover plate 11 may be in contact with the end surface of the casing member 12 adjacent to the cover plate 11. The casing member 12, the cover plate 11 and the connecting member 60 are welded and connected at one time by means of laser welding, penetration welding or resistance welding. A welding portion 201 is formed at a position where the bottom surface of the cover plate 11 is in contact with the casing member 12 and the connecting member 60. Certainly, in practical applications, the protruding portion 602 may also be formed by a plurality of protrusions arranged at intervals on the main body portion 601 adjacent to the cover plate 11, and the embodiment of the present disclosure is not limited thereto.

In another possible embodiment of the present disclosure, a part of the connecting member 60 is clamped between the cover plate 11 and the casing member 12, so that two opposite surfaces of the connecting member 60 are in contact with the casing member 12 and the cover plate 11, respectively.

The connecting member 60 includes a main body portion 601, a protruding portion 602 and a flange portion 603. The protruding portion 602 is connected to the main body portion 601, and the flange portion 603 is connected to the protruding portion 602. The main body portion 601 and the cover plate 11 are arranged at intervals, and the flange portion 603 is clamped between the cover plate 11 and the casing member 12.

During the manufacturing process of the battery, the main body portion is engaged with the position-limiting portion of the casing member, and the flange portion overlaps with the end portion (that is, the opening) of the casing member. Under the circumstances, the predetermined distance between the position-limiting portion and the opening is consistent with the height of the protruding portion.

Illustratively, the protruding portion 602 surrounds the main body portion 601, the flange portion 603 surrounds the protruding portion 602, and the flange portion 603 is located at one end of the protruding portion 602 away from the main body portion 601. The protruding portion 602 may be in contact with the inner wall of the casing member 12, the flange portion 603 is higher than the end surface of the casing member 12 adjacent to the cover plate 11, and the flange portion 603 extends outward from the protruding portion 602 to the surface of the casing member 12. The cover plate 11 is disposed on one side of the flange portion 603 away from the casing member 12, and the cover plate 11 is at least partially in contact with the flange portion 603. The welding part 201 may extend from the cover plate 11 to the casing member 12 at one time, so as to realize simultaneous welding of the cover plate 11, the connecting member 60 and the casing member 12.

In the battery provided by the embodiment of the present disclosure, the position-limiting portion 121 is provided at a predetermined distance from the opening of the casing member 12, and the position-limiting portion 121 is used to limit the position of the connecting member 60, so that the connecting member 60 is easily aligned in the battery manufacturing process, which facilitates to improve the production efficiency and yield of the battery. In addition, the second casing segment 123 of the casing member 12 has an initial state and a contracted state. The diameter of the second casing segment 123 is larger than the size of the adaptor 60 during the configuration of the connecting member 60, which avoids friction between the connecting member 60 and the casing member 12 during configuration of the connecting member 60 and metal chips caused by the friction, thereby enhancing the safety of the battery.

The battery provided by the embodiment of the present disclosure may be applied to an electric vehicle. When the battery is used in an electric vehicle, a plurality of batteries may be integrated into a battery pack, and the battery pack is arranged on the electric vehicle to provide energy to the electric vehicle.

The battery pack may include a box body and a plurality of batteries, the plurality of batteries are arranged in the box body, and the box body is used for supporting and protecting the batteries. A bus bar may further be provided in the battery box body, and the bus bar may be connected to the battery poles to realize the serial or parallel connection of the plurality of batteries.

In practical applications, the battery pack may be mounted on a frame of an electric vehicle. The battery pack may be fixedly connected to the frame. Alternatively, the battery pack may be a modular battery pack, and the modular battery pack may be detachably connected to the vehicle body for easy replacement.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery, comprising:
a battery casing (10), including a casing member (12) and a cover plate (11), wherein the casing member (12) and the cover plate (11) are connected to form an accommodation space;
a cell (20), arranged in the accommodation space of the battery casing (10); and
a connecting member (60), connecting the cell (20) and the battery casing (10);
wherein the casing member (12) is provided with a position-limiting portion (121) for limiting a position of the connecting member (60), and the casing member (12), the cover plate (11), and the connecting member (60) are connected by welding.

2. The battery according to claim 1, wherein the connecting member (60) is engaged with the position-limiting portion (121).

3. The battery according to claim 1, wherein the casing member (12), the cover plate (11), and the connecting member (60) are connected by one-time welding.

4. The battery according to claim 3, wherein the connecting member (60) comprises:
a main body portion (601), wherein the main body portion (601) is in contact with the position-limiting portion (121) on the casing member (12);
a protruding portion (602), wherein the protruding portion (602) extends toward one side of the main body portion (601) adjacent to the cover plate (11), and the protruding portion (602) and the cover plate (11) are welded.

5. The battery according to claim 4, wherein an end surface of the protruding portion (602) adjacent to the cover plate (11) is aligned with an end surface of the casing member (12) adjacent to the cover plate (11).

6. The battery according to claim 3, wherein the connecting member (60) comprises:
a main body portion (601), wherein the main body portion (601) is in contact with the position-limiting portion (121) on the casing member (12);
a protruding portion (602), wherein the protruding portion (602) extends toward one side of the main body portion (601) adjacent to the cover plate (11);
a flange portion (603), wherein the flange portion (603) is arranged at one end of the protruding portion (602) away from the main body portion (601), and the flange portion (603) overlaps with an end portion of the casing member (12);
wherein the cover plate (11) is disposed on one side of the flange portion (603) away from the casing member (12), and the casing member (12), the flange portion (603), and the cover plate (11) are connected by one-time welding.

7. The battery according to any one of claims 1-6, wherein the cover plate (11) comprises:
a cover plate body (111);
a positioning portion (112), wherein the positioning portion (112) is arranged on one side of the cover plate body (111) adjacent to the cell (20), and the positioning portion (112) cooperates with the connecting member (60) to realize positioning of the cover plate (11).

8. The battery according to claim 1, wherein a recess is provided on the casing member (12), and the recess forms the position-limiting portion (121).

9. The battery according to claim 1, wherein the casing member (12) comprises:
a first casing segment (122), arranged adjacent to the cover plate (11);
a second casing segment (123), connected to the first casing segment (122), wherein the position-limiting portion (121) is formed between the first casing segment (122) and the second casing segment (123).

10. The battery according to claim 9, wherein the second casing segment (123) has a contracted state and an initial state, the second casing segment (123) in the initial state is able to be converted into the contracted state through a contracting process.

11. The battery according to claim 10, wherein the second casing segment (123) in the initial state has a cross-sectional area larger than a cross-sectional area of the first casing segment (122), the cross-sectional area of the first casing segment (122) refers to an area of the first casing segment (122) taken parallel to a cross-section of the cover plate (11), and a cross-sectional area of the second casing segment (123) refers to an area of the second casing segment (123) taken parallel to the cross-section of the cover plate (11).

12. The battery according to claim 11, wherein the second casing segment (123) in the contracted state has a cross-sectional area that is the same as the cross-sectional area of the first casing segment (122).

13. A manufacturing method for a battery, the manufacturing method comprising the following steps:
forming a position-limiting portion (121) on a casing member (12), wherein the casing member (12) is provided with an opening, and a predetermined distance is formed between the position-limiting portion (121) and the opening of the casing member (12);
placing a connecting member (60) on the position-limiting portion (121) from the opening on the casing member (12); and
welding a cover plate (11) to the opening on the casing member (12) to block the opening.

14. The manufacturing method for the battery according to claim 13, wherein the step of welding the cover plate (11) to the opening on the casing member (12) comprises:
connecting the casing member (12), the connecting member (60), and the cover plate (11) by one-time welding.

15. The manufacturing method for the battery according to claim 13, wherein the step of forming a position-limiting portion (121) on the casing member (12) comprises:
forming a first casing segment (122) and a second casing segment (123), wherein the first casing segment (122) and the second casing segment (123) are connected, and a cross-sectional area of the second casing segment (123) is larger than a cross-sectional area of the first casing segment (122), so as to form the position-limiting portion (121) at a junction between the first casing segment (122) and the second casing segment (123), and the opening is formed at one end of the second casing segment (123) away from the first casing segment (122).

16. The manufacturing method for the battery according to claim 15, wherein after the connecting member (60) is placed on the position-limiting portion (121) from the opening on the casing member (12), the method further comprises:
contracting the second casing segment (123) to reduce the cross-sectional area of the second casing segment (123).

17. The manufacturing method for the battery according to claim 16, wherein the cross-sectional area of the second casing segment (123) after contracting is the same as a cross-sectional area of the first casing segment (122).
